# DEMANDE DE BREVET EUROPEEN

(11) **EP 1 936 384 A1**
(43) Date de publication de la demande: **25.06.2008**
(21) Numéro de dépôt: 06127003.9
(22) Date de dépôt: 22.12.2006
(51) Int. Cl.: G01N 35/10, G01N 30/00, G01N 1/34, G01N 1/40

(54) **Aiguille et dispositif pour micro-extraction en phase solide**

(71) Demandeur: SMart Nose S.A., 2074 Marin-Epagnier (CH)
(72) Inventeur: Zesiger, Thierry, 2016, Cortaillod (CH)
(74) Mandataire: Grosfillier, Philippe

(57) **Abrégé**

L'invention concerne une aiguille creuse (1) pour SPME contenant un matériau adsorbant (2) et comprenant une extrémité libre (5), caractérisée par le fait qu'elle comporte plusieurs trous latéraux (4) disposés dans une zone se situant depuis le matériau adsorbant (2) en direction de la pointe (5).

L'invention se rapporte également à un procédé de fabrication de l'aiguille creuse (1).

L'invention concerne également un dispositif utilisant l'aiguille précitée en combinaison avec un récipient et des moyens d'aspiration.

## Description

### Domaine de l'invention

La présente invention concerne le domaine la micro-extraction en phase solide que l'on nomme communément SPME. L'invention concerne plus précisément une aiguille pouvant être utilisée dans le cadre de la SPME.

### Etat de la technique

La SPME est un outil efficace pour obtenir une concentration préliminaire d'un échantillon, telle qu'une solution aqueuse, contenant un composé organique destiné à être analysé, p.ex. au moyen d'une chromatographie en phase gazeuse (GC).
A cet effet, on utilise de préférence une aiguille creuse dans laquelle est disposé un matériau adsorbant. Ce dernier peut se présenter sous la forme d'un revêtement de la paroi interne de l'aiguille, d'une masse constituée d'un copolymère ou d'un amas de particules solides libres, càd non-fixées par un liant.
A titre d'exemple, la demande de brevet européen EP 1 411 068 A1 décrit un matériau adsorbant sous forme de copolymère et la demande de brevet américain US 2001/0032521 A1 présente un matériau adsorbant sous forme de laine de quartz.

La phase d'adsorption consiste à faire passer l'échantillon, en général plusieurs fois, à travers le matériau adsorbant. La désorption se fait de préférence par chauffage, directement dans le port d'injection de l'appareil d'analyse, p.ex. chromatographe.

Lors des opérations d'adsorption et de désorption, l'aiguille creuse doit être introduite dans un récipient (p.ex. fiole, seringue, injecteur GC, etc...) muni d'un port qui est obturé par un septum. Pour faciliter son passage au travers du septum, l'aiguille comporte de préférence une extrémité distale acérée.

Les aiguilles creuses de l'état de la technique présentent cependant certains inconvénients. Par exemple, lorsqu'elles traversent un septum, des fragments de ce dernier peuvent être accidentellement introduits dans l'aiguille, entraînant de la sorte une obstruction partielle ou totale de l'écoulement de l'échantillon dans l'aiguille.

Il existe donc un besoin de pouvoir remédier au problème précité.

Par ailleurs, un autre problème est observé avec les aiguilles de l'état de la technique.

La présence d'un matériau absorbant dans l'aiguille entraîne une perte de charge importante, à tel point qu'un système accessoire de pompage devient nécessaire pour permettre à l'espace de tête chargé de substances organiques volatiles (COV) à fortiori les liquides, de transiter efficacement au travers du matériau adsorbant. A noter cependant que le simple fait de « pomper » au moyen d'un mouvement de va-et-vient du piston d'une seringue - comme p.ex. mentionné dans l'article de Lipinski (Linpinsky, J., Fresenius J. Anal. Chem., vol 369 (2001), p57 ou les brevets de HP et Chromtech) - ne produit pas une aspiration suffisante du gaz. Pour obtenir un rendement suffisant, un grand nombre de cycles doivent être opérés, ce qui occasionne des temps de préparation trop longs pour un usage optimal en analyse de routine.

Il existe donc également un besoin d'améliorer le passage du fluide au travers de l'aiguille.

### Résumé de l'invention

La présente invention offre l'avantage de remédier notamment aux problèmes exposés dans le chapitre précédent.
A cet effet, elle concerne une aiguille creuse pour SPME contenant un matériau adsorbant et comprenant une extrémité libre. L'invention proprement dite se
caractérise par le fait que l'aiguille comporte plusieurs trous latéraux disposés dans une zone se situant depuis le matériau adsorbant en direction de la pointe.

Avantageusement, la pointe de l'aiguille est fermée.

Selon un mode de réalisation de l'invention, les trous sont disposés entre le matériau adsorbant et la pointe de l'aiguille.

Selon un autre mode de réalisation, une partie au moins des trous se situent à la hauteur du matériau adsorbant.
Il est également possible de disposer l'ensemble des trous au niveau du matériau adsorbant.

De préférence, le matériau adsorbant est constitué d'un amas de particules non-liées entre elles.
Bien évidemment, le matériau adsorbant peut être constitué de tout autre substance/structure connue de l'homme du métier, p.ex. de laine de quartz, d'un copolymère ou d'un revêtement sur la paroi interne de l'aiguille.

Lorsque le matériau adsorbant est constitué de particules non-liées, on choisit de préférence des trous dont le diamètre est tel que les particules puissent être retenues dans l'aiguille. En général, le diamètre des trous est donc inférieur à celui de la plus petite particule.

Afin de retenir l'amas de particules dans une position déterminée, on utilise de préférence des premiers moyens de retenue, p.ex. chicane, qui sont adaptés pour retenir l'amas du côté de l'extrémité proximale de l'aiguille.
Des deuxièmes moyens de retenue peuvent également être disposés du côté de la pointe de l'aiguille. Ces derniers sont particulièrement utiles, voire nécessaires, si la pointe de l'aiguille n'est pas fermée.

L'aiguille peut également avoir une ou plusieurs cannelures située(s) vers son extrémité libre. Dans cette configuration, une partie des trous au moins sont disposés dans la ou les cannelures.
La présence d'une cannelure a pour effet de rigidifier la pointe de l'aiguille et d'éviter que les trous se bouchent par des fragments de septum pouvant être enlevés lors du passage de l'aiguille. En effet, les trous ainsi disposés n'entrent jamais en contact direct avec le septum.

Dans un autre mode de réalisation, l'aiguille comprend un premier trou disposé entre la pointe et le matériau adsorbant et un deuxième trou disposé entre le premier trou et le matériau adsorbant.

Avantageusement, le diamètre du deuxième trou est inférieur au diamètre du premier trou.

Selon une variante, l'aiguille comprend plus de deux trous disposés successivement le long de l'aiguille.

L'invention concerne également un dispositif SPME comprenant une aiguille telle que définie dans l'un quelconque des trois alinéas précédents, un récipient muni d'un élément de fermeture adapté pour être percé par ladite aiguille et des moyens d'aspiration destinés à aspirer au travers de l'aiguille un fluide contenu initialement dans le récipient, ladite aiguille étant en outre montée mobile par rapport au récipient, de manière à se trouver au moins dans une première position et une deuxième position; la première position étant définie par la mise en communication des deux trous avec l'intérieur du récipient , la deuxième position étant définie par la mise en communication du deuxième trou avec l'air libre et la mise en communication du premier trou avec l'intérieur du récipient.

L'invention concerne également l'utilisation du dispositif tel que défini dans la revendication caractérisée par les étapes suivantes :
- Mise de l'aiguille dans la première position,
- Aspiration,
- Déplacement de l'aiguille de manière à mettre le deuxième trou en communication avec l'air libre,
- Cessation de l'aspiration.

Alternativement, l'invention concerne l'utilisation caractérisée par les étapes suivantes :
- Mise de l'aiguille dans la deuxième position,
- Aspiration,
- Cessation de l'aspiration.

L'invention concerne enfin un procédé de fabrication d'une aiguille telle que définie précédemment. Le procédé se caractérise par les étapes suivantes :
- Préparation d'une aiguille creuse munie de trous latéraux, l'aiguille ne possède pas d'extrémité acérée,
- Introduction optionnelle de premiers moyens de retenue, p.ex. une chicane,
- Introduction du matériau adsorbant par la pointe de l'aiguille ,
- Introduction optionnelle de deuxièmes moyens de retenue par la pointe de l'aiguille,
- Fermeture optionnelle de la pointe par écrasement des parois de l'aiguille,
- Fabrication optionnelle d'une extrémité libre acérée.

On obtient donc un bien meilleur transfert si l'aiguille de pré-concentration peut être connectée à une source de dépression externe. Celle-ci peut être soit une pompe ou un volume prédéterminé mis préalablement sous vide (boucle).
Dans le cas d'échantillons conditionnés dans des flacons hermétiques dont la fermeture contient un septum, l'aspiration doit être contrôlée précisément. Une aspiration trop forte ou de trop longue durée épuiserait le contenu du flacon sans espoir de pouvoir refaire transiter l'échantillon au travers de l'adsorbant comme c'est le cas avec les mouvements de va-et-vient. Cependant, ce dernier mode a d'autres défauts, notamment de fortement dépendre de la pression régnant à l'intérieur du flacon hermétique, et des éventuelles fuites toujours possibles au niveau du piston de la seringue. En utilisant une pompe annexe (auxiliaire), il convient donc de régler le vide de la pompe, le flux d'aspiration ou sa durée de fonctionnement. Tous ces paramètres sont aisément accessibles à l'homme de métier. A relever que la seringue portant l'aiguille adsorbante décrite ici doit posséder au moins un port, par exemple latéral, sur lequel sera connecté le pompage auxiliaire.
Une des possibilités privilégiées d'utilisation d'un système de pompage annexe consiste à enclencher une pompe connectée à la seringue pendant un temps suffisant pour qu'un volume connu et constant, mais nettement inférieur au volume de gaz contenu dans le flacon, soit aspiré et conduit au travers de l'adsorbant. Dans une seconde phase, dite de relaxation, on réintroduit dans le flacon un volume de gaz ou d'air pratiquement équivalent à ce qui ma été aspiré afin d'augmenter sa pression interne. Un nouveau cycle d'aspiration peut alors être à nouveau effectué et ainsi de suite jusqu'à l'obtention du facteur de pré-concentration désiré. L'adjonction de gaz dans le cycle de relaxation peut se faire par une fuite aménagée au niveau du flacon (par introduction d'une seconde aiguille par exemple) ou par la seringue si celle-ci peut-être connectée à une source de gaz en plus de sa connexion à une source de vide. Une troisième variante est décrite dans l'exécution particulière ci-dessous.

### Description détaillée de l'invention

L'invention sera décrite de manière plus détaillée au moyen des figures suivantes :
La figure 1 est une représentation schématique d'un mode de réalisation d'une aiguille selon l'invention.
La figure 2 est une représentation schématique de l'extrémité libre d'une aiguille qui comprend une cannelure.
La figure 3 est représentation schématique d'un dispositif selon l'invention dans lequel l'aiguille se trouve dans une première position.
La figure 4 est représentation schématique d'un dispositif selon l'invention dans lequel l'aiguille se trouve dans une deuxième position.

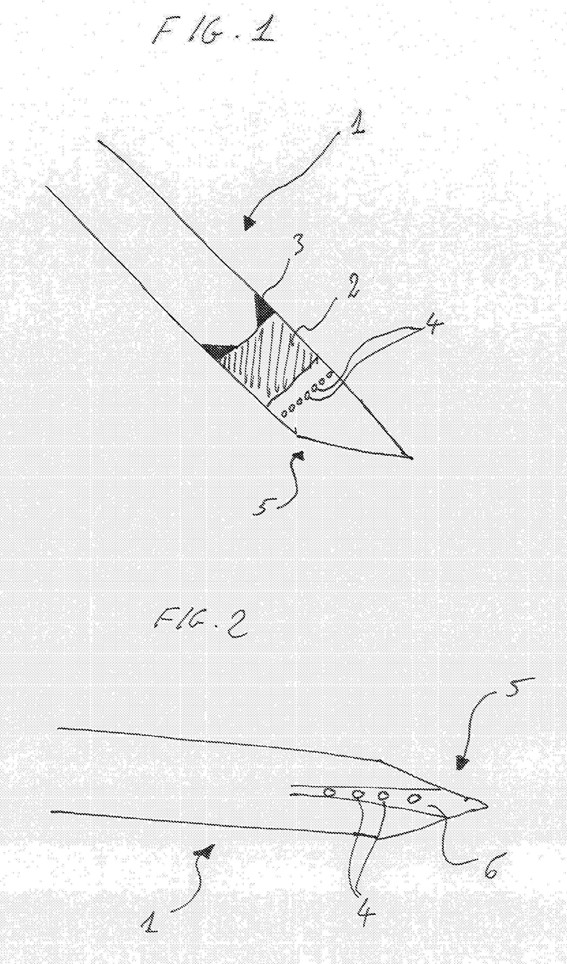

Selon le mode de réalisation de la figure 1, l'aiguille creuse **1** est montée directement, ou par l'intermédiaire d'un tuyau ou tube, au bout d'une seringue ou d'une pompe aspirante ou d'un élément sous vide (canister) . Ces éléments ne sont pas illustrés. L'aiguille **1** peut-être fixe ou amovible. Elle est de préférence en acier ou autre métal dur.
L'aiguille **1** contient à l'intérieur un matériau adsorbant **2** sous forme de particules solides, libres, c'est-à-dire non fixées par un liant. La phase d'adsorption de l'échantillon (liquide ou gazeux) est réalisée par activation du piston de la seringue vers le haut puis vers le bas alternativement, ou en prélevant le volume désiré du fluide au moyen d'une pompe ou d'un système sous vide. La désorption se fait préférentiellement par chauffage, en général directement dans le port d'injection de l'appareil d'analyse (chromatographe). Le cas échéant, si le matériau adsorbant **2** le supporte, cette opération peut être effectuée par rinçage dans un solvant approprié.
Le matériau adsorbant **2** est positionné dans l'aguille plutôt vers la pointe afin que celui-ci se trouve convenablement immergé dans la zone chaude de l'injecteur pour une désorption thermique optimale. Le matériau adsorbant **2**, qui peut être du charbon actif, ou tout autres adsorbant solide, notamment un polymère (Tenax^{™}, sol-gel, etc...) est maintenu en place dans l'aiguille **1** par une ou plusieurs « chicanes » **3** laissant passer librement le fluide mais retenant les particules. Pour le remplissage de l'aiguille **1**, on procède de la façon suivante : on utilise initialement une aiguille sans pointe mais munie de trous latéraux **4**. Par l'une des extrémités de l'aiguille, on intègre d'abord la chicane **3**, dont le design peut être variable; on introduit ensuite par aspiration le matériau adsorbant **2,** de préférence tamisé, et dont la taille des particules est comprise entre 100 et 500 microns. La quantité de matériau adsorbant **2** est déterminée par pesée et/ou en vérifiant la position du lit en introduisant avec précaution un élément permettant de déterminer la position finale du matériau adsorbant **2** (par exemple le même type d'outil permettant d'introduire et positionner correctement la chicane **3**). Une seconde chicane (non illustrée) peut être montée après le matériau absorbant pour l'empêcher de ressortir. L'aiguille **1** est finalement pincée et/ou refermée par un quelconque moyen, connu de l'homme du métier, de manière à former également une extrémité acérée.

Alternativement, il est possible d'introduire un matériau adsorbant **2** constitué d'un mélange de polymères ou d'introduire différents polymères par couches successives.

Les trous latéraux **4** sont positionnés du côté de la pointe **5** de l'aiguille **1,** vers la base du matériau adsorbant 2 ou au niveau de la seconde chicane si un tel élément est installé. Le fait d'utiliser une multitude de trous latéraux **4** garantit un meilleur fonctionnement de l'aiguille **1** en autorisant une circulation optimale du flux de l'échantillon à pré-concentrer. Un unique trou latéral serait en effet insuffisant car celui-ci peut être facilement obturé par une particule d'adsorbant ou une particule extérieure (morceaux de septum). Un unique trou à la pointe de l'aiguille est également à proscrire en raison des risques d'obturation par des fragments de septum. Eventuellement, il est possible de prévoir une pluralité de trous latéraux et un trou à la pointe de l'aiguille.
Avantageusement, lorsque le matériau absorbant est constitué de particules non liées, on utilise un nombre élevé de petits trous d'un diamètre inférieur à la plus petite particule d'adsorbant. Cette configuration créée un filtre permettant de retenir les particules à l'intérieur de l'aiguille et ne rend donc pas nécessaire l'emploi d'une seconde chicane.

Dans une exécution particulière de l'invention (voir figure 2), les trous **4** sont disposés à l'intérieur d'une cannelure **6** aménagée le long de l'aiguille **1,** de préférence vers son extrémité libre. Plusieurs cannelures peuvent être aménagées, chacune pouvant comporter un ou plusieurs trous. Ces cannelures on pour effet de rigidifier la pointe de l'aiguille et d'éviter que les trous soient obstrués par des fragments de septum. En effet, les trous ainsi disposés n'entrent jamais en contact direct avec le septum.

Il va de soi que l'invention ne se limite pas aux modes de réalisation de l'aiguille exposés précédemment. N'importe quel nombre, dimension ou disposition des trous latéraux fait partie de l'invention.

De même, l'invention ne se limite pas au procédé décrit plus haut. Elle couvre également n'importe quel procédé permettant de réaliser une aiguille creuse comprenant un matériau adsorbant et des trous latéraux.

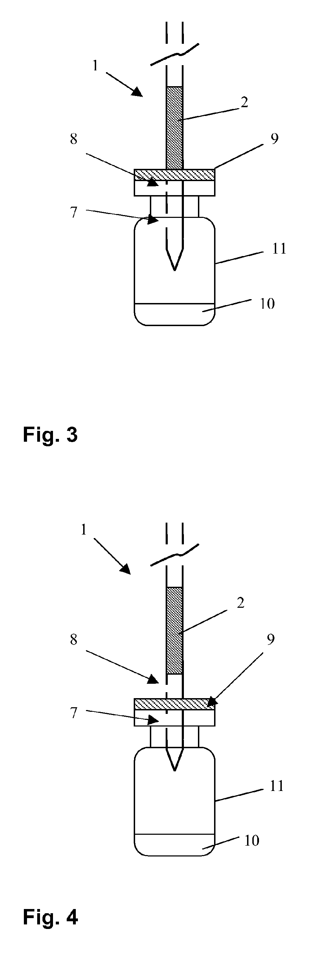

La figure 3 illustre une variante de l'invention dans laquelle les trous sont disposés le long de l'aiguille, ceci afin de limiter l'aspiration dans le flacon **11.** Les trous **7,8** sont tous disposés au-dessous de l'adsorbant **2.** Le trou inférieur **7,** ou les trous **7** (s'il il en a plusieurs aménagés à la même hauteur) est/sont disposé(s) tout en bas vers la pointe de l'aiguille **1**. C'est au travers de ce(s) trou(s) que l'analyte est introduit dans l'aiguille **1**. Le trou supérieur **8** est disposé plus haut, entre le trou inférieur **7** et l'adsorbant. Le trou supérieur **8** est destiné à produire une fuite et est en général de diamètre plus petit que celui du trou inférieur **7**. Si, lors de l'emploi d'une telle aiguille **1** , les trous **7** et **8** sont introduits complètement à l'intérieur du flacon scellé **11,** le fonctionnement est tel que celui décrit ci-dessus dans lequel une source de vide et de gaz sont activés alternativement.

La figure 3 illustre une utilisation normale dans laquelle les deux trous **7,8** sont à l'intérieur du flacon scellé **11** contenant l'échantillon **10.**
Les deux trous **7,8** sont disposés en-dessous de l'adsorbant **2**. A noter que le trou supérieur **8** est plus petit que le trou inférieur **7**.

Si par contre l'aiguille **1** ne pénètre pas totalement dans le flacon **11** et que le trou supérieur **8** reste au-dessus du septum **9**, c'est-à-dire à l'air libre (voir figure 4), on limite volontairement le vide dans le flacon **11** en raison de la fuite aménagée. Le fait d'interrompre le pompage permet à l'air de rentrer par le trou supérieur **8** resté à l'extérieur et de rétablir la pression atmosphérique dans le flacon **11**. Un second cycle de pompage identique au premier peut alors être initié.

La figure 4 illustre donc un cas particulier dans lequel le trou supérieur **8** est à l'extérieur alors que le trou inférieur **7** est dans le flacon scellé **11** contenant l'échantillon **10.**
En aspirant au moyen d'une pompe par exemple on dilue l'échantillon par de l'air entrant par le trou supérieur **8**. Ceci n'épuise pas l'échantillon **10** trop vite. Le flux par le trou inférieur **7** s'arrête spontanément quand la pression dans le flacon **11** atteint un certain vide. Le fait d'arrêter la pompe permet au flacon **11** de se remettre à la pression atmosphérique car l'air rentre par le trou supérieur **8** et ressort dans le flacon **11** par le trou inférieur **7.** Ce système offre l'avantage de s'affranchir d'une vanne. Dans ce cas, on ne commuterait que la pompe par un relais électrique.

Dans une variante où un pompage important doit être effectué, il conviendrait de pénétrer l'aiguille jusqu'à ce qu'elle atteigne une position similaire à celle de la figure 3 dans la phase d'aspiration. Après un temps de pompage définit par la méthode, si la seringue ne dispose pas d'un second port pour l'introduction d'un gaz, (le premier étant déjà utilisé pour le pompage), on peut alors rétablir la pression dans le flacon **11** en remontant simplement l'aiguille **1** jusqu'à la position définie par la figure 4 où le trou supérieur **8** se trouve à l'air libre. Avant de relancer un cycle de pompage, l'aiguille **1** devra à nouveau être enfoncée.

Dans une variante particulière non-illustrée de ce qui vient d'être décrit, plusieurs trous sont disposés le long de l'aiguille mais toujours au-dessous de l'adsorbant (comme une flûte). En modifiant la pénétration de l'aiguille dans le septum , on laisse plus ou moins de trous à l'extérieur ce qui permet de moduler le vide final à l'intérieur du flacon.

On constate donc qu'avec le procédé décrit dans la présente invention, on n'a besoin que d'une vanne connectée à une pompe, ou d'une pompe à vide commutable électriquement et la possibilité de monter et descendre précisément l'aiguille dans le flacon contenant l'échantillon, pour reproduire des cycles d'aspiration plus puissants et réguliers que de simples mouvements de va-et-vient du piston d'une seringue. Avec le système décrit ici, la durée de préparation de l'échantillon est considérablement réduite et est rendue plus précise et plus reproductible qu'avec les mouvements de va-et-vient pratiqués avec les systèmes de l'état de la technique.

Il va de soi que l'invention ne se limite pas aux exemples illustrés et non-illustrés discutés plus haut.

## Revendications

1. Aiguille creuse (1) pour SPME contenant un matériau adsorbant (2) et comprenant une extrémité libre (5), **caractérisée par le fait qu'**elle comporte plusieurs trous latéraux (4) disposés dans une zone se situant depuis le matériau adsorbant (2) en direction de la pointe (5).

2. Aiguille creuse selon la revendication 1 **caractérisée par le fait que** la pointe (5) est fermée.

3. Aiguille creuse selon la revendication 1 ou 2 **caractérisé par le fait que** les trous (4) se situent entre le matériau adsorbant (2) et la pointe (5).

4. Aiguille creuse selon la revendication 1 ou 2 **caractérisée par le fait qu'**une partie des trous (4) au moins se situent à la hauteur du matériau adsorbant (2).

5. Aiguille creuse selon l'une quelconque des revendications précédentes **caractérisée par le fait que** le matériau adsorbant (2) est constitué d'un amas de particules non liées.

6. Aiguille creuse selon la revendication 5 **caractérisé par le fait que** le diamètre des trous (4) est dimensionné de manière à retenir les particules dans l'aiguille (1).

7. Aiguille creuse selon la revendication 5 ou 6 **caractérisé par le fait qu'**elle comporte des premiers moyens de retenue (3) adaptés pour retenir le matériau adsorbant (2) du côté proximal de l'aiguille (1).

8. Aiguille creuse selon la revendication 7 **caractérisé par le fait qu'**elle comporte des deuxièmes moyens de retenue adaptés pour retenir le matériau adsorbant (2) du côté de la pointe (5) de l'aiguille (1).

9. Aiguille creuse selon l'une quelconque des revendications précédentes comprenant une cannelure (6) disposée vers son extrémité libre (5), les trous (4) étant disposés dans ladite cannelure (6).

10. Aiguille creuse selon l'une quelconque des revendications précédentes comprenant un premier trou (7) disposé entre la pointe (5) et le matériau adsorbant (2) et un deuxième trou (8) disposé entre le premier trou (7) et le matériau adsorbant (2).

11. Aiguille creuse selon la revendication 10 dans laquelle le diamètre du deuxième trou (8) est inférieur au diamètre du premier trou (7).

12. Aiguille creuse selon la revendication 10 ou 11 comprenant plus de deux trous disposés successivement le long de l'aiguille.

13. Dispositif SPME comprenant une aiguille telle que définie dans la revendication 10,11 ou 12, un récipient muni d'un élément de fermeture adapté pour être percé par ladite aiguille et des moyens d'aspiration destinés à aspirer au travers de l'aiguille un fluide contenu initialement dans le récipient, ladite aiguille étant en outre montée mobile par rapport au récipient, de manière à se trouver au moins dans une première position et une deuxième position; la première position étant définie par la mise en communication des deux trous (a,b) avec l'intérieur du récipient , la deuxième position étant définie par la mise en communication du deuxième trou (8) avec l'air libre et la mise en communication du premier trou (7) avec l'intérieur du récipient.

14. Procédé de fabrication d'une aiguille creuse (1) selon l'une quelconque des revendications précédentes 1 à 12 **caractérisé par** les étapes suivantes :
- Préparation d'une aiguille creuse (1) sans pointe munie de trous latéraux (4),
- Introduction optionnelle de premiers moyens de retenue (3),
- Introduction par la pointe (5) du matériau adsorbant (2),
- Introduction optionnelle par la pointe (5)de deuxièmes moyens de retenue,
- Fermeture optionnelle de la pointe (5) par écrasement des parois de l'aiguille (1),
- Fabrication optionnelle d'une extrémité libre (5) acérée.

15. Utilisation du dispositif tel que défini dans la revendication 13 **caractérisée par** les étapes suivantes :
- Mise de l'aiguille dans la première position,
- Aspiration,
- Déplacement de l'aiguille de manière à mettre le deuxième trou (8) en communication avec l'air libre,
- Cessation de l'aspiration.

16. Utilisation du dispositif tel que défini dans la revendication 13 **caractérisée par** les étapes suivantes :
- Mise de l'aiguille dans la deuxième position,
- Aspiration
- Cessation de l'aspiration.
